# EUROPÄISCHE PATENTSCHRIFT

(11) **EP 0 394 656 B1**
(45) Veröffentlichungstag und Bekanntmachung des Hinweises auf die Patenterteilung: **06.07.1994**
(21) Anmeldenummer: 90104784.5
(22) Anmeldetag: 14.03.1990
(51) Int. Cl.: F02P 1/08, F02P 5/15, F02P 5/02

(54) **Kondensator-Zündanlage**
Capacitor ignition device
Installation d'allumage par condensateur

(30) Priorität: 28.04.1989 DE 3914026
(43) Veröffentlichungstag der Anmeldung: 31.10.1990
(73) Patentinhaber: Prüfrex-Elektro-Apparatebau Inh. Helga Müller, geb. Dutschke, 90556 Cadolzburg (DE)
(72) Erfinder: Erhard, Werner, D-8501 Cadolzburg (DE)
(74) Vertreter: Matschkur, Götz, Lindner Patent- und Rechtsanwälte

(56) Entgegenhaltungen:
- DE-A- 2 352 135
- DE-A- 3 833 620
- DE-C- 3 608 740
- DE-C- 3 817 471
- GB-A- 1 111 535

## Beschreibung

Die Erfindung bezieht sich auf eine Kondensator-Zündanlage für Brennkraftmaschinen, insbesondere für Rasenmäher, Kettensägen, Trennschleifer od. dgl., mit einem Magnetgenerator und einem Zündimpulsgeber zum Durchschalten eines den Kondensator über die Primärwicklung der Zündspule entladenden elektronischen Schalters, wobei der vom Magnetgenerator angesteuerte, mit einem Drehzahlmesser versehene Zündimpulsgeber über ein eingespeichertes Zündkennfeldprogramm eine drehzahlabhängige Verzögerung des Zündimpulses gegenüber dem Magnetgeneratorimpuls bewirkt und das Zündkennfeldprogramm unterschiedliche Verstellkurven für gleiche Drehzahlbereiche bei unterschiedlichen Betriebszuständen enthält, sowie mit einer Umschaltvorrichtung, um von einer Startzündverstellkurve auf eine Betriebszündverstellkurve und zurück umzuschalten.

Bei einem in der älteren deutschen Patentanmeldung DE-A-3817471 beschriebenen Kondensator-Zündanlage der vorstehend beschriebenen Art ist eine den Betriebszustand überwachende Umschaltvorrichtung vorgesehen, um von der Startverstellkurve mit bei zunehmender Drehzahl steigender Verstellung bei Erreichen einer vorgegebenen Drehzahl auf eine Betriebs-Verstellkurve mit bei sinkender Drehzahl steigender Verstellung umzuschalten, wobei über ein durch den Motorstillstand aktiviertes Zeitglied nach einer vorgegebenen Stillstandzeit des Motors auf die Start-Verstellkurve zurückgeschaltet wird und der Umschaltpunkt der Verstellkurven unterhalb der Leerlaufdrehzahl liegt.

Durch diese Ausbildung einer Kondensator-Zündanlage wird zunächst erreicht, daß beim Anwerfen des Motors grundsätzlich die Startverstellkurve durchlaufen wird, bei der der Zeitpunkt relativ spät im Vergleich zum Zündzeitpunkt bei der Arbeitsdrehzahl von ca. 8000 U/min. für eine Kettensäge oder einen Trennschleifer liegt. Dadurch wird verhindert, daß eine zu frühe Zündung den Motor rückwärts antreibt und dabei der Bedienungsperson das Starterseil aus der Hand gerissen wird. Selbstverständlich kann die Verstellung beliebig programmiert werden, so daß sie den jeweiligen Einsatzzwecken, also auch dem jeweils vorgesehenem Arbeitsgerät angepaßt werden kann. Ein Rückwärtslauf kann somit durch die Wahl der für den jeweiligen Motor optimalen Verstellung immer vermieden werden.

Bei schlagartigem Loslassen des Gashebels bei Vollgas (reach-come-down) besteht die Gefahr, daß die Leerlaufdrehzahl unterschritten wird und der Motor ausgeht. Deshalb ist im Zündkennfeldprogramm die angesprochene Betriebs-Verstellkurve vorgesehen, die oberhalb der Leerlaufdrehzahl von der Start-Verstellkurve abzweigt und mit umgekehrter Neigung zu niedrigeren Drehzahlen ansteigt. Sobald der Motor anspringt, erreicht er die Leerlaufdrehzahl von beispielsweise 3500 U/min. Dabei wird der Umschaltpunkt, nämlich der Abzweigpunkt der Verstellkurven voneinander, der bei beispielsweise 3000 U/min. liegt, durchfahren und die digitale Kondensator-Zündanlage schaltet automatisch auf die Betriebs-Verstellkurve um. Wird ab jetzt die Leerlaufdrehzahl wieder unterschritten, so bekommt der Motor Frühzündung. Dies bewirkt eine Erhöhung der Motorleistung und damit der Drehzahl. Folglich geht der Motor nicht aus.

Wird der Motor abgestellt und ist er länger als eine vorgebbare Stillstandzeit ausgeschaltet gewesen, wobei diese Stillstandzeit in erster Linie als Sicherheitsmaßnahme gedacht ist, so wird über einen diesen Betriebszustand feststellenden Fühler, beispielsweise einem Drehzahlmesser oder einem Motortemperaturfühler, über ein Zeitglied verzögert wieder auf die Start-Verstellkurve zurückgeschaltet.

Diese ältere Kondensator-Zündanlage verhindert zwar zuverlässig ein Ausgehen des Motors bei sinkender Drehzahl, ist jedoch in ihrem starren Umschaltverhalten nicht mehr an die jeweiligen Bedürfnisse anpaßbar und kann vor allem auch nicht durch den Benutzer wahlweise in anderer Funktion der Zündverstellung betrieben werden.

Der Erfindung liegt daher die Aufgabe zugrunde eine Kondensator-Zündanlage der eingangs genannten Art so auszugestalten, daß die Sicherheit beim Starten, insbesondere von Handarbeitsgeräten, wie Trennschleifern od. dgl., noch weiter erhöht ist.

Zur Lösung dieser Aufgabe ist erfindungsgemäß vorgesehen, daß die Startzündverstellkurve und die Betriebszündverstellkurve einander über einen die Leerlaufdrehzahl als obere Grenze aufweisenden Drehzahlbereich überlappen, wobei die Drehzahe-Untergrenze der stets oberhalb der Startzündverstellkurve liegenden Betriebszündverstellkurve bei einem Drehzahlwert eingestellt ist, der oberhalb der durch das Anwerfen des Motors erreichbaren Startdrehzahl liegt.

Bei der erfindungsgemäßen Kondensator-Zündanlage ist im Gegensatz zur Zündanlage der eingangs beschriebenen Art nach der älteren deutschen Patentanmeldung keine Verzweigungsstelle vorgesehen, an der die Start-Zündverstellkurve in die Betriebszündverstellkurve einmündet, sondern diese beiden Zündverstellkurven sind völlig voneinander getrennt. Es geht bei der Ausgestaltung der vorliegenden Anmeldung auch nicht primär um das Verhindern eines Ausgehens des Motors beim Rückgang der Drehzahlen unter die im Verzweigungspunkt der beiden Zündverstellkurven, sondern vielmehr um ein noch sichereres Verhindern von Verletzungen von Benutzern von Handkraftmaschinen wie Trennschleifern, Kettensägen od. dgl., speziell beim grundsätzlich durch ein Starterseil erfolgenden Handanwerfen des Motors.

Selbstverständlich liegt auch bei der Kondensator-Zündanlage gemäß der vorliegenden Erfindung die Leerlaufdrehzahl von etwa 3500 U/min. wieder unterhalb der Auslösedrehzahl für die Fliehkraftkupplung, so kann bei Betrieb der Startzündverstellkurve niemals die Fliehkraftkupplung schließen und damit weder den Trennschleifer noch die Kettensäge in Betrieb setzen. Auf der anderen Seite ist die Betriebszündverstellkurve so programmiert, daß sie erst bei Drehzahlen Zündimpulse liefert, die oberhalb der Startdrehzahl liegen, so daß die maximal beim Anwerfen des Motors erreichbare Drehzahl noch keine Zündung auslöst. Dadurch wird verhindert, daß der Motor in Vollgasstellung gestartet werden kann. Die Verletzungsgefahr wäre nämlich beim Anwerfen des Motors mit sofortigem Hochdrehen sehr groß, weil der Bediener den Motor zu diesem Zeitpunkt nur mit einer Hand halten kann. Die zweite Hand befindet sich ja noch am Starterseil. Erst durch die erfindungsgemäße Umschaltvorrichtung, die beispielsweise ein Schalter sein kann, entsprechend dem Schalter S1 der älteren Patentanmeldung, wird von der Startzündverstellkurve auf die Betriebszündverstellkurve umgeschaltet. Dieser Zeitpunkt liegt aber so spät, daß der Benutzer inzwischen längst das Starterseil losgelassen und mit der zweiten Hand das Gerät ergriffen hat, wobei unter Verwendung des bereits angesprochenen mechanischen Schalters am Handgriff des Geräts zum Umschalten diese beidhändige Halterung des Geräts zwangsweise vor dem Umschalten erzwungen wird. Für andere Geräte kann es aber durchaus vorteilhaft sein, nicht einen mechanischen Schalter am Handgriff des Geräts vorzusehen, sondern die Umschaltvorrichtung durch eine softwaremäßige Programmierung zu realisieren.

Beim Handstart des Motors werden nur sehr kleine Drehzahlen erreicht. Außerdem läuft der Motor sehr unrund, weil die Kompression des Motors den Bewegungsablauf beim Handstart in einem bestimmten Winkelbereich stark abbremst.

Um diesem schlechten Startverhalten bei einer erfindungsgemäßen Kondensator-Zündanlage abzuhelfen, ist in weiterer Ausgestaltung der Erfindung zusätzlich vorgesehen, daß die Startzündverstellkurve erst ab einer Grenz-Drehzahl Zündfunken liefert, die oberhalb der Startdrehzahl, zwischen 1000 und 2000 Umdrehungen, vorzugsweise bei etwa 1500 U/min. liegt, und daß bis zu dieser Drehzahl nur eine vom umlaufenden Polrad an einer vorgegebenen Stelle nach durchschreiten des oberen Totpunktes des Motorkolbens erzeugter Startzündfunke zur Verfügung steht.

Durch diese quasi einfache starre Zündfunkenerzeugung in einem Startbereich unter Ausschaltung der Elektronik, die erst ab der vorgegebenen Grenzdrehzahl die Auslösung der Zündung übernimmt, wird darüber hinaus erreicht, daß im Startdrehzahlbereich bei schlagartigem Abbremsen des Motors nur dann eine Zündung ausgelöst wird, wenn der obere Totpunkt des Motorkolbens überschritten ist. Dadurch ist ein Zurückschlagen des Motors völlig ausgeschlossen. Zur Erzeugung dieser Start-Zündfunken kann gemäß einer ersten Ausführungsform der vorliegenden Erfindung eine zusätzliche, der Zündspule in Drehrichtung des Polrads nachgeordnete Triggerspule vorgesehen sein, die bevorzugt in Serie mit einer Diode im Ausgang des elektronischen Zündimpulsgebers parallel geschaltet ist.

Wird der elektronische Zündimpulsgeber so programmiert, daß er bis zu einer vorgegebenen Grenzdrehzahl, von beispielsweise 1500 U/min. keine Zündung auslöst, so wird bis zu diesem Zeitpunkt immer nur der Spannungsimpuls der zusätzlichen Triggerspule wirksam. Die Zündung wird jedesmal dann ausgelöst, wenn der Dauermagnet des Polrads an der Triggerspule vorbeiläuft. Ab der Grenzdrehzahl liefert dann die elektronische Schaltung den Steuerimpuls für den die Zündspule entladenden elektronischen Schalter, vorzugsweise einen Thyristor. Liegt dieser Steuerimpuls vor dem Spannungsimpuls der Triggerspule, so wird die Zündung von der elektronischen Schaltung, also vom elektronischen Zündimpulsgeber, ausgelöst und die Triggerspule bleibt wirkungslos, da ihr Impuls nach Auslösen der Zündung praktisch ins Leere läuft. Die Impulse werden deshalb aber nach wie vor auch noch an den Thyristor abgegeben.

Will man dies vermeiden, so kann man auch vorsehen, daß die Startzündfunken der Triggerspule über einen elektronischen Schalter, vorzugsweise einen Transistor, kurzgeschlossen werden, der vom elektronischen Zündimpulsgeber bei Erreichen der vorgegebenen Umschaltdrehzahl auf elektronische Zündimpulsverstellung durchgeschaltet wird.

Anstelle einer derartigen gesonderten Triggerspule zur Erzeugung der Start-Zündfunken unter Umgehung des elektronischen Zündimpulsgebers kann gemäß einer zweiten Ausführungsform der vorliegenden Erfindung auch vorgesehen sein, daß der Start-Zündfunke von der negativen Flanke des zweiten vom Polrad in der Zündspule induzierten positiven Impulses abgeleitet ist. Auch in diesem Fall ist, da die Polradstellung immer einer bestimmten Lage des Motorkolbens entspricht, sichergestellt, daß die Zündung nicht vor dem oberen Totpunkt des Kolbens erfolgen kann und der Motor somit beim Handstart nicht zurückschlagen kann.

Weitere Vorteile, Merkmale und Einzelheiten der Erfindung ergeben sich aus der nachfolgenden Beschreibung einiger Ausführungsbeispiele sowie anhand der Zeichnung. Dabei zeigen:
- Fig. 1: eine schematische Darstellung der Zündverstellkurven einer erfindungsgemäßen Kondensator-Zündanlage,
- Fig. 2: ein Schaltbild einer Kondensator-Zündanlage mit einer gesonderten Triggerspule zur Zündung von Start-Zündfunken,
- Fig. 3: eine schematische Darstellung der Zündverstellkurven der Zündanlage nach Fig. 2,
- Fig. 4: eine schematische Darstellung der Anordnung der Triggerspule der Schaltung nach Fig. 2 bezüglich der Zündspule,
- Fig. 5: eine Abwandlung der Kondensator-Zündanlage gemäß Fig. 5 mit Start-Zündfunkenunterdrückung bei höheren Drehzahlen,
- Fig. 6: eine Darstellung der Signale einer Kondensator-Zündanlage, bei der die Start-Zündfunken von den in der Zündspule induzierten Signalen abgeleitet sind, und
- Fig. 7: eine Darstellung der Signale einer gegenüber der Fig. 6 etwas abgewandelten Kondensator-Zündanlage, bei der die Start-Zündfunken von den in der Zündspule induzierten Signalen abgeleitet sind.

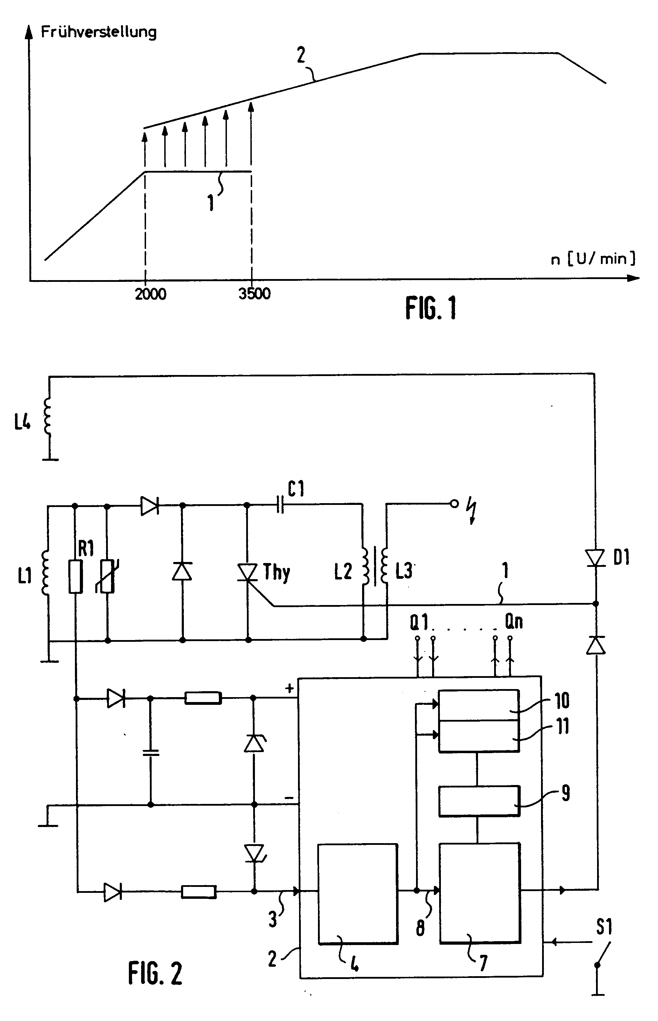

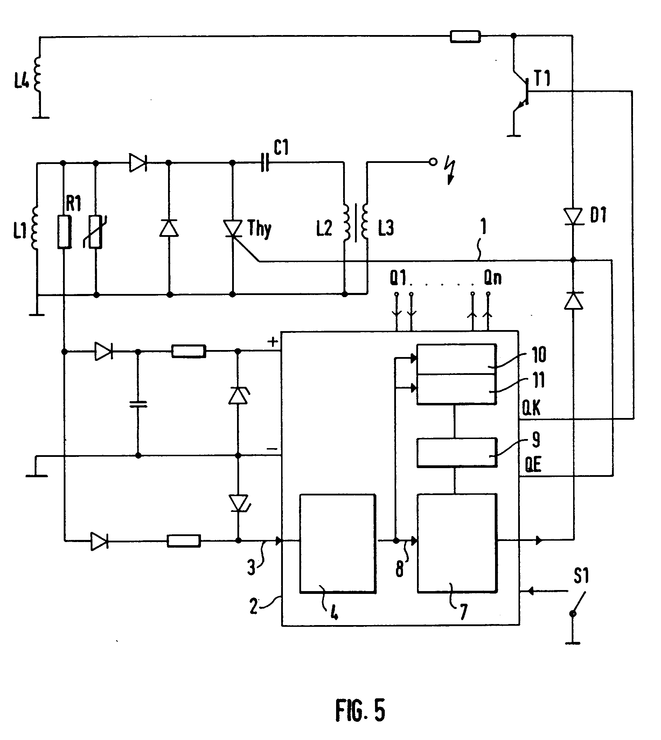

Bezugnehmend auf die Ausbildung Kondensator-Zündanlage - wie sie grundsätzlich in der bereits genannten älteren Patentanmeldung DE-A-3817471 beschrieben ist - und wie sie in Fig. 2 unter Weglassung der Triggerspule L4 mit nachgeschalteter Diode D1 zu erkennen ist, erkennt man im oberen Teil eine übliche Kondensator-Zündanlage, bei der das in der Ladespule L1 von einem vorbeilaufendem Polrad induzierte Signal den Ladekondensator C1 auflädt, der in Serie mit der Primärwicklung L2 der Zündspule liegt. Durch einen über eine Leitung 1 ankommenden Zündimpuls wird im jeweils gewünschten Zündzeitpunkt der Thyristor Thy durchgeschaltet und entlädt den Kondensator C1 über die Primärwicklung L2 der Zündspule, so daß in deren Sekundärwicklung L3 der Zündimpuls induziert werden kann. Zur Erzeugung des Zündimpulses dient die im unteren Teil der Figuren 2 und 5 wiedergebene Schaltung, wobei die außerhalb des eingerahmten Verzögerungsteils 2 angeordneten Glieder die Stromversorgung darstellen, bei der ausgehend von der über den Widerstand R1 von der Ladespule L1 abgezweigten vom Polrad induzierten Spannung eine Versorgungsgleichspannung erzeugt wird. Über den Eingang 3 wird das in der Ladespule L1 induzierte Signal als Eingangsimpuls an die Schaltung 2 angelegt, die zunächst einen Drehrichtungsdetektor 4 aufweist. Dieser Drehrichtungsdetektor stellt die Zahl der positiven und/oder negativen Halbwellen des Eingangsimpulses fest, aus denen man die Drehrichtung des Polrades ermitteln kann. Der Drehrichtungsdetektor ist einfach so ausgebildet, daß der nur dann den am Eingang 3 zugeführten Eingangsimpuls als Ausgangsimpuls wieder abgibt, wenn die Brennkraftmaschine vorwärts läuft. Dieser Impuls wird nunmehr der eigentlichen Impulsverzögerungsschaltung 7 zugeführt, die am Ausgang über die Leitung 1 den Zündimpuls an den Thyristor abgibt. Das Ausmaß der Verzögerung des am Eingang 8 der Impulsverzögerungsschaltung zugeführten, mit dem Eingangssignal am Eingang 3 im wesentlichen synchronen Zündsignals erfolgt drehzahlabhängig nach Maßgabe eines eingespeicherten Zündkennfeldprogramms. Der Ausgangsimpuls des Drehrichtungsdetektors wird zunächst einem Drehzahlmesser 10 zugeleitet, wo er über ein Umschaltglied 11 das Zündkennfeldprogramm und die Verzögerungsschaltung 7 erreicht.

Das erfindungsgemäße Zündkennfeldprogramm, wie es in Fig. 1 dargestellt ist, enthält neben der Startzündverstellkurve 1 eine Betriebszündverstellkurve 2. Die Startzündverstellkurve 1 ist dabei so programmiert, daß oberhalb der Leerlaufdrehzahl, die im dargestellten Ausführungsbeispiel bei 3500 U/min. liegt, keine Zündung ausgelöst wird. Dadurch wird die Leerlaufdrehzahl auf diesen Wert von 3500 U/min. begrenzt und die Fliehkraftkupplung, die bei motorbetriebenen Arbeitsgeräten wie Kettensägen oder Trennschleifern üblicherweise bei 4000 U/min. einkuppelt, kann nicht schließen. Mit Hilfe einer Umschaltvorrichtung, vorzugsweise des Schalters S1 in den Figuren 2 und 5, wird bei einer beliebigen Drehzahl unterhalb von 3500 U/min. auf die Betriebszündverstellkurve 2 umgeschaltet. Diese ist so programmiert, daß die maximal beim Anwerfen des Motors erreichbare Drehzahl (ca. 2000 U/min.) noch keine Zündung auslöst. Dadurch wird verhindert, daß der Motor in Vollgasstellung gestartet werden kann. Die Verletzungsgefahr wäre nämlich beim Anwerfen des Motors mit sofortigem Hochdrehen sehr groß, weil der Bediener den Motor zu diesem Zeitpunkt nur mit einer Hand halten kann. Die zweite Hand befindet sich ja beim Starten noch am Starterseil.

Läuft der Motor bereits mit Leerlaufdrehzahl (ca. 2000 U/min. bis 3500 U/min.), so wird mit Betätigung des Gashebels in Vollgasstellung auf die Verstellkurve 2 umgeschaltet. Die Verstellkurve 1 und die Verstellkurve 2 überlappen sich im Bereich 2000 U/min. bis 3500 U/min. Die Betriebszündverstellkurve 2 ist dabei so ausgelegt, daß der Zündzeitpunkt stets früher liegt als bei der Startzündverstellkurve 1. Dadurch beschleunigt der Motor bei Betätigung des Schalters S1 - oder einer etwaigen automatischen Umschaltvorrichtung, die durch softwaremäßige Programmierung realisiert werden kann - besonders gut.

Beim Handstart des Motors werden grundsätzlich nur sehr kleine Drehzahlen erreicht. Außerdem läuft der Motor sehr unrund, weil die Kompression des Motors den Bewegungsablauf beim Handstart in einem bestimmten Winkelbereich stark abbremst. Deshalb läßt sich die Kurbelwellenstellung des Motors, ausgehend von einem bestimmten Bezugspunkt, bei Handstart-Drehzahlen kaum vorausberechnen.

Um diese Schwierigkeiten zu beseitigen ist beim abgewandelten Ausführungsbeispiel nach den Figuren 2 bis 4 vorgesehen, daß die Zündung bei einer bestimmten Polradstellung verzögerungsfrei ausgelöst wird, und zwar durch Vorsehen einer gesonderten Triggerspule L4 für den Startdrehzahlbereich. Ab einer vorbestimmten Drehzahl übernimmt dann die elektronische Schaltung 2 die Auslösung der Zündung.

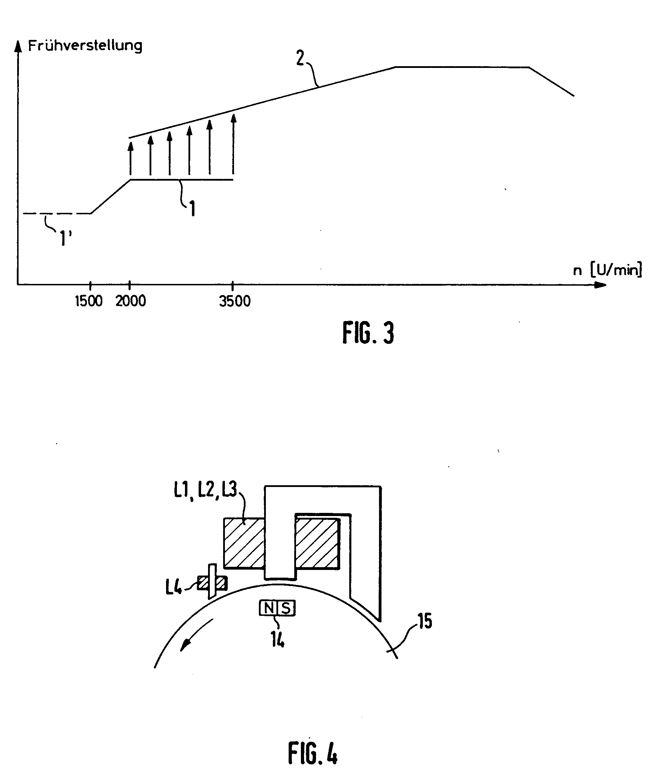

Man erkennt aus Fig. 4, wie der Dauermagnet 14 des Polrades 15 zunächst an den Spulen L1, L2 und L3 und anschließend an der gesonderten Triggerspule L4 vorbeiläuft. In Fig. 2 erkennt man, daß sowohl die elektronische Schaltung 2, wie auch die Triggerspule L4 den Thyristor Thy zünden können.

Wird die elektronische Schaltung 2 nun so programmiert, daß sie bis ca. 1500 U/min. keine Zündung auslöst, so wird in diesem Bereich nur der Spannungsimpuls der Triggerspule L4 wirksam, was in Fig. 2 als gestrichelter Ast 1 gestrichelt dargestellt ist. Dieser gestrichelte horizontale Ast ohne Früh- und Spätverstellung beruht also ausschließlich auf den Startzündimpulsen, die von der Triggerspule L4 herkommen. Im übrigen verläuft die Startzündverstellkurve 1 und die Betriebszündverstellkurve 2 wie in Fig. 1. Die Startzündverstellkurve 1 ist lediglich, wie oben angesprochen unterhalb 1500 U/min. durch entsprechende Programmierung abgeschnitten und durch die gestrichelte Zündverstellkurve 1′ der Triggerspule L4 ersetzt.

Die Zündung wird jedesmal ausgelöst, wenn der Dauermagnet an der Triggerspule L4 vorbeiläuft. Ab 1500 U/min. liefert auch die elektronische Schaltung einen Steuerimpuls für den Thyristor. Liegen diese Steuerimpulse vor den Spannungsimpulsen der Triggerspule L4, so wird die Zündung von der elektronischen Schaltung 2 ausgelöst und die Triggerspule L4 bleibt - obgleich ihre Impulse weiter ankommen - wirkungslos. Die Fig. 5 zeigt ein abgewandeltes Ausführungsbeispiel der Anordnung nach Fig. 2. Dabei wird der Triggerimpuls von der Spule L4 von der elektronischen Schaltung 2 über den Ausgang QK durch Ansteuern des Transistors T1 kurzgeschlossen. Dies kann insbesondere notwendig werden, wenn zur Drehzahlbegrenzung jede Zündung unterdrückt werden soll. Über den Eingang QG wird der elektronischen Schaltung mitgeteilt, wann eine Zündung ausgelöst wird. So kann die elektronische Schaltung 2 den Eingang 3 während der Zündung sperren um Störimpulse für die Drehzahlmessung auszuschließen.

Die erfindungsgemäßen Schaltungsausbildungen gemäß den Figuren 2 und 5 haben den Vorteil, daß im Startdrehzahlbereich bei schlagartigem Abbremsen des Motors nur dann eine Zündung ausgelöst wird, wenn der obere Totpunkt des Motorkolbens überschritten ist. Dadurch ist ein Zurückschlagen des Motors völlig ausgeschlossen.

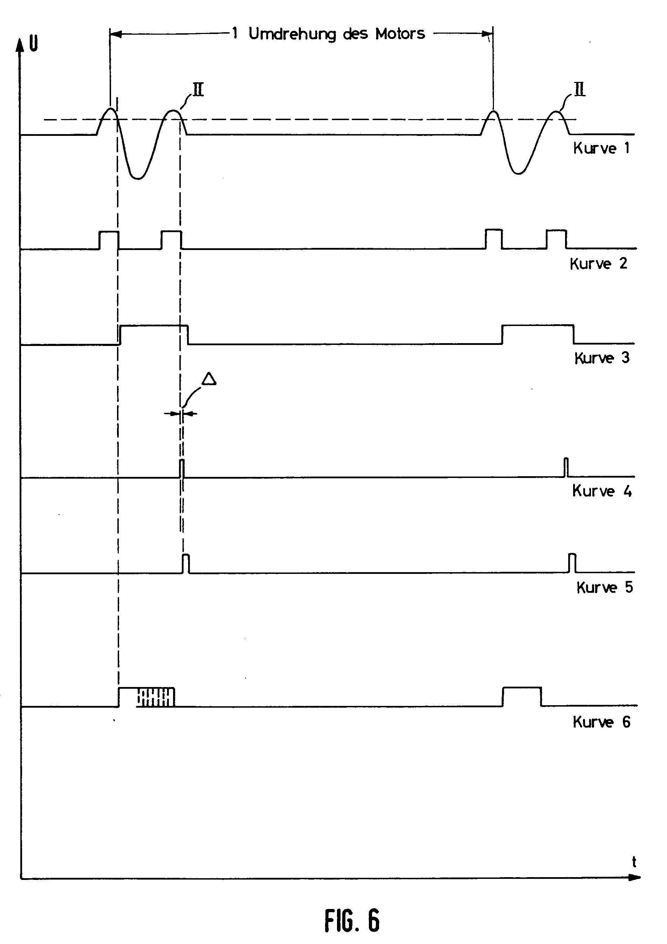

In Fig. 6 ist schematisch anhand eines Diagramms der entsprechenden Impulse eine weitere Variante der Schaltungsanordnung nach den Figuren 2 und 5 dargestellt, wobei zur Erzeugung der speziellen Startzündfunken im Bereich unterhalb 1500 U/min. eine gesonderte Triggerspule L4 vermieden wird. Zu diesem Zweck verwendet man im Startdrehzahlbereich zur Bildung des Startzündfunkens die negative Flanke des zweiten positiven Impulses II (Fig. 6, Kurve 1), der vom Polrad in der Zündspule erzeugt wird. Die Kurve 2 zeigt die vom ersten und zweiten positiven Impuls nach entsprechender Impulsformung abgeleiteten Impulse. Die Kurve 3 zeigt die programmierte Zeit, innerhalb der der zweite positive Impuls im Handstartdrehzahlbereich (negative Flanke) eingetroffen sein muß. In Kurve 4 ist die prograßmierte Verzögerungszeit bei Handstart-Drehzahl dargestellt. Die Verzögerungszeit wird mit dem zweiten positiven Impuls gestartet und ist sehr klein oder gegen null. Bei Handstart kann demnach die Zündung direkt vom zweiten positiven Impuls ausgelöst werden. In Kurve 5 ist dargestellt wie der Thyristor gezündet wird, weil der zweite positive Impuls (dessen negative Flanke) vor Ablauf der Verzögerungszeit bereits da war.

In Fig. 6 schließlich ist die programmierte Verzögerungszeit bei laufendem Motor angedeutet. Die gestrichelten Linien deuten an, daß die Verzögerungszeit auch kürzer programmiert werden kann (Frühverstellung des Zündzeitpunktes mit steigender Drehzahl möglich).

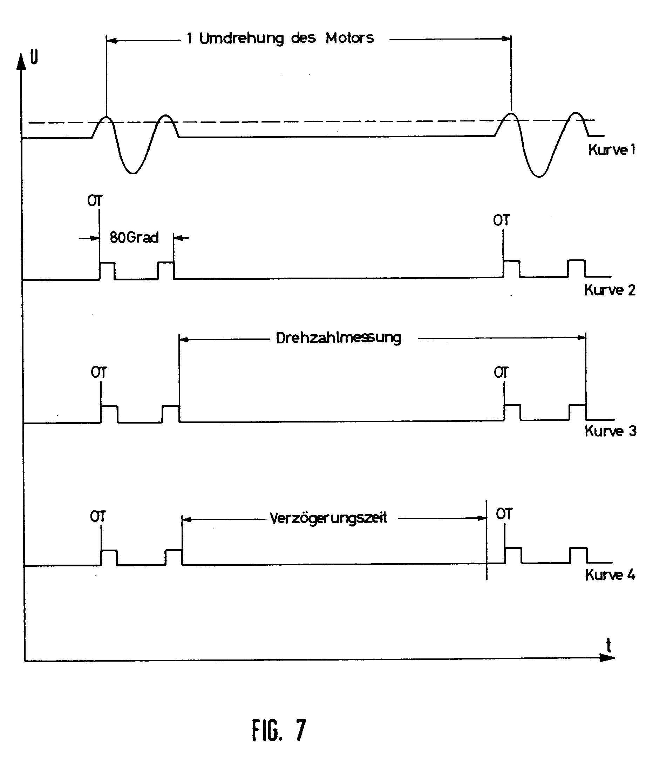

Figur 7 zeigt eine weitere Möglichkeit, wie zur Erzeugung der speziellen Startzündfunken im Bereich unterhalb 1500 U/min die gesonderte Triggerspule L 4 eingespart werden kann. Kurve 1 in Fig. 7 zeigt wieder den Spannungsverlauf, wie er von der Spule L1 erzeugt und der Elektronik zugeführt wird. Aus dieser Kurve werden zwei positive Impulse pro Umdrehung des Motors gewonnen, wobei der Abstand zwischen der ansteigenden Flanke des ersten Impulses und der abfallenden Flanke des zweiten Impulses etwa 80° beträgt (Kurve 2). Im Startdrehzahlbereich des Motors wird der Zündfunken nun direkt von der ansteigenden Flanke des ersten Impulses erzeugt. Der Motor wird dabei so ausgelegt, daß dieser Zündfunke bei OT ausgelöst wird. Dadurch ist ein Zurückschlagen des Motors auch bei beliebig kleiner Startdrehzahl ausgeschlossen. Wie schon an anderer Stelle beschrieben, läuft der Motor bei Handstart-Drehzahlen sehr unrund. Wenn man von einem Bezugspunkt, an dem die Drehzahl gemessen wird, nach einer bestimmten Verzögerungszeit die Zündung auslöst, so kann sich während der Verzögerungszeit die Drehzahl extrem ändern und der vorausberechnete Zündzeitpunkt, der ja bei einer bestimmten Kurbelwellenstellung liegen sollte, stimmt nicht mehr.

Bei der direkten Auslösung der Zündung durch die ansteigende Flanke des ersten Impulses kann es diese Schwierigkeiten nicht geben, weil die Impulse nur bei einer bestimmten Geschwindigkeit in einer bestimmten Kurbelwellenstellung erzeugt werden.

Sobald der Motor angesprungen ist, liegt die Leerlaufdrehzahl bei ca. 2000 U/min bis 3000 U/min.

Für eine vernünftige Arbeitsweise des Motors muß die Zündung bei diesen Drehzahlen vor OT erfolgen. Dazu wird bereits ab der ersten Umdrehung die Motordrehzahl mit der abfallenden Flanke des zweiten Impulses gemessen (Kurve 3 in Fig. 7). Dieser Meßpunkt liegt ca. 80° nach OT. An diesem Punkt tritt bei einem Motor keine extreme Drehzahlverringerung ein. Dadurch kann auch die negative Flanke des zweiten Impulses zur Auswertung der Drehzahl herangezogen werden. Von diesem Bezugspunkt wird von der Zündschaltung entsprechend der Drehzahl eine Verzögerungszeit eingestellt, nach der die Zündung ausgelöst wird. Dieser Zündzeitpunkt kann nun auf einen beliebigen Punkt vor OT gelegt werden (Kurve 4 in Fig. 7).

Die Erfindung ist nicht auf die dargestellten Ausführungsbeispiele beschränkt. So wäre es insbesondere auch möglich, einige weitere zusätzliche Betriebsweisen mit in die Elektronik einzuprogrammieren. So wäre es beispielsweise möglich auch auf eine zusätzliche weitere Betriebsverstellkurve umzuschalten, die motorspezifisch so ausgelegt ist, daß der Motor abkühlt. Diese zweite Zündverstellkurve könnte gegebenenfalls auch so ausgelegt sein, daß die Drehzahlbegrenzung durch Funkenabschaltung auf einen kleineren Drehzahlwert gelegt wird, wobei das Umschalten auf diese weitere Betriebszündverstellkurve, vorzugsweise über einen Motortemperaturfühler erfolgen könnte. Dabei versteht es sich von selbst, daß selbstverständlich auch eine Funktion des Motortemperaturfühlers zweckmäßig mit vorgesehen werden kann, bei dem bei Überschreiten einer bestimmten Temperatur überhaupt keine Zündung mehr ausgelöst wird, und der Motor daher ausgeht, um Beschädigungen bei Überhitzung zu vermeiden.

Schließlich liegt es auch noch im Rahmen der Erfindung, die Zündung während mehrerer Umdrehungen zu unterdrücken, sobald der Motor eine bestimmte Temperatur übersteigt. Der Anwender würde auf diese Weise durch schwankende Motordrehzahl auf den zu heißen Motor hingewiesen und könnte dann geeigente Abhilfen, entweder durch Umschaltung auf andere Programme oder durch völliges Ausschalten des Motors ergreifen.

## Patentansprüche

1. Kondensator-Zündanlage für Brennkraftmaschinen, insbesondere für Rasenmäher, Motorsägen, Trennschleifer od. dgl., mit einem Magnetgenerator und einem Zündimpulsgeber zum Durchschalten eines den Kondensator über die Primärwicklung der Zündspule entladenden elektronischen Schalters, wobei der vom Magnetgenerator angesteuerte, mit einem Drehzahlmesser versehene Zündimpulsgeber über ein eingespeichertes Zündkennfeldprogramm eine drehzahlabhängige Verzögerung des Zündimpulses gegenüber dem Magnetgenerator-Impuls bewirkt und das Zündkennfeldprogramm unterschiedliche Verstellkurven für gleiche Drehzahlbereiche bei unterschiedlichen Betriebszuständen enthält sowie mit einer Umschaltvorrichtung, um von einer Startzündverstellkurve auf eine Betriebszündverstellkurve und zurück umzuschalten, dadurch gekennzeichnet, daß die Startzündverstellkurve und die Betriebszündverstellkurve einander über einen die Leerlaufdrehzahl als obere Grenze aufweisenden Drehzahlbereich überlappen, wobei die Drehzahe-Untergrenze der stets oberhalb der Startzündverstellkurve liegenden Betriebszündverstellkurve bei einem Drehzahlwert eingestellt ist, der oberhalb der durch das Anwerfen des Motors erreichbaren Startdrehzahl liegt.

2. Kondensator-Zündanlage nach Anspruch 1, dadurch gekennzeichnet, daß die Umschaltvorrichtung einen mechanischen Schalter am Handgriff des Gerätes umfaßt.

3. Kondensator-Zündanlage nach Anspruch 1 oder 2, dadurch gekennzeichnet, daß die Umschaltvorrichtung durch softwaremäßige Programmierung realisiert ist.

4. Kondensator-Zündanlage nach einem der Ansprüche 1 bis 3, dadurch gekennzeichnet, daß die Startzündverstellkurve erst ab einer Grenz-Drehzahl Zündfunken liefert, die oberhalb der Startdrehzahl zwischen 1000 U/min und 2000 U/min, vorzugsweise bei etwa 1500 U/min liegt und daß bis zu dieser Drehzahl nur ein vom umlaufenden Polrad an einer vorgegebenen Stelle nach Durchschreiten des oberen Totpunktes des Motorkolbens erzeugter Start-Zündfunke zur Verfügung steht.

5. Kondensator-Zündanlage nach Anspruch 4, dadurch gekennzeichnet, daß eine zusätzliche, der Zündspule in Drehzahlrichtung des Polrades nachgeordnete Triggerspule zur Erzeugung des Start-Zündfunken vorgesehen ist.

6. Kondensator-Zündanlage nach Anspruch 5, dadurch gekennzeichnet, daß die Triggerspule in Serie mit einer Diode dem Ausgang des elektronischen Zündimpulsgebers parallel geschaltet ist.

7. Kondensator-Zündanlage nach Anspruch 6, dadurch gekennzeichnet, daß die Startzündfunken über einen elektrischen Schalter, vorzugsweise einen Transistor, kurzgeschlossen werden, der vom elektronischern Zündimpulsgeber bei Erreichen der vorgegebenen Umschaltdrehzahl auf elektronische Zündimpulsverstellung durchgeschaltet wird.

8. Kondensator-Zündanlage nach Anspruch 4, dadurch gekennzeichnet daß der Start-Zündfunken von der negativen Flanke des zweiten vom Polrad in der Zündspule induzierten, positiven Impuls abgeleitet ist.

9. Kondensator-Zündanlage nach Anspruch 4, dadurch gekennzeichnet, daß der Start-Zündfunken von der positiven Flanke des ersten vom Polrad in der Zündspule induzierten positiven Impuls abgeleitet ist.

## Claims

1. Capacitor-discharge ignition system for internal combustion engines, in particular for lawnmowers, electric saws, grinding machines or the like, having a magnetic generator and an ignition pulse transmitter for switching through an electronic switch discharging the capacitor via the primary winding of the ignition coil, wherein the ignition pulse transmitter provided with a speedometer and actuated by the magnetic generator effects a speed-dependent delay of the ignition pulse relative to the pulse of the magnetic generator via a stored ignition characteristic field program, and the characteristic field program comprises different timing curves for the same speed ranges at different operating states together with a switch-over device, in order to switch from a starting ignition timing curve to an operating ignition timing curve and back again, characterised in that the starting ignition timing curve and the operating ignition timing curve overlap one another over a speed range having the idling speed as the upper limit, whilst the lower speed limit of the operating ignition timing curve always lying above the starting ignition timing curve is set at a speed which is above the starting speed achievable by starting of the motor.

2. Capacitor-discharge ignition system according to claim 1, characterised in that the switch-over device comprises a mechanical switch on the handle of the appliance.

3. Capacitor-discharge ignition system according to claim 1 or 2, characterised in that the switch-over device is formed by software programming.

4. Capacitor-discharge ignition system according to one of claims 1 to 3, characterised in that the starting ignition timing curve only supplies ignition sparks after a certain limit speed, which is above the starting speed of between 1000 rpm and 2000 rpm, preferably at approximately 1500 rpm, and in that up to this speed the only spark available is a starting ignition spark generated by the rotating pole wheel at a specified position after the upper dead centre of the motor piston has been passed.

5. Capacitor-discharge ignition system according to claim 4, characterised in that an additional trigger coil connected in series with the ignition coil in the speed direction of the pole wheel is provided for generating the starting ignition spark.

6. Capacitor-discharge ignition system according to claim 5, characterised in that the trigger coil in series with a diode is connected in parallel to the output of the electronic ignition pulse transmitter.

7. Capacitor-discharge ignition system according to claim 6, characterised in that the starting ignition sparks are short-circuited via an electric switch, preferably a transistor, which is switched through to electronic ignition pulse timing by the electronic ignition pulse transmitter when the specified switch-over speed is reached.

8. Capacitor-discharge ignition system according to claim 4, characterised in that the starting ignition spark is derived from the negative side of the second positive pulse induced in the ignition coil by the pole wheel.

9. Capacitor-discharge ignition system according to claim 4, characterised in that the starting ignition spark is derived from the positive side of the first positive pulse induced in the ignition coil by the pole wheel.

## Revendications

1. Installation d'allumage par condensateur pour machine à combustion interne, en particulier pour tondeuse à gazon, tronçonneuse, tronçonneuse à meule, etc., comportant un générateur magnétique et un impulseur d'allumage pour commander un commutateur électronique déchargeant le condensateur via l'enroulement primaire de la bobine d'allumage, l'impulseur d'allumage commandé par le générateur magnétique et pourvu d'un tachymètre produisant, via un programme de réseaux de caractéristiques d'allumage mémorisé, un retard en fonction du nombre de tours de l'impulsion d'allumage vis-à-vis de l'impulsion du générateur magnétique et le programme de réseaux de caractéristiques d'allumage contenant différentes courbes de réglage pour les mêmes plages de nombres de tours dans différents états d'exploitation, et comportant également un dispositif de commutation pour passer d'une courbe de réglage de l'allumage au démarrage à une courbe de réglage de l'allumage en exploitation et retour, caractérisée en ce que la courbe de réglage de l'allumage au démarrage et la courbe de réglage de l'allumage en exploitation se chevauchent l'une l'autre via une plage de nombres de tours dont la limite supérieure est le nombre de tours à vide, la limite inférieure du nombre de tours de la courbe de réglage de l'allumage en exploitation qui se trouve en permanence au-dessus de la courbe de réglage de l'allumage au démarrage étant réglée à une valeur du nombre de tours qui se trouve au-dessus du nombre de tours au démarrage susceptible d'être atteint par la mise en marche du moteur.

2. Installation d'allumage par condensateur selon la revendication 1, caractérisée en ce que le dispositif de commutation comprend un commutateur mécanique sur la manette de l'appareil.

3. Installation d'allumage par condensateur selon la revendication 1 ou 2, caractérisée en ce que le dispositif de commutation est réalisé par programmation logicielle.

4. Installation d'allumage par condensateur selon l'une quelconque des revendications 1 à 3, caractérisée en ce que la courbe de réglage de l'allumage au démarrage ne délivre des étincelles d'allumage qu'à partir d'un nombre de tours limite, qui se situe au-dessus du nombre de tours au démarrage entre 1.000 tr/mn et 2.000 tr/mn, de préférence à environ 1.500 tr/mn, et en ce que, jusqu'à ce nombre de tours, seule une étincelle d'allumage de démarrage produite par la roue polaire tournante en un point prédéterminé après passage par le point mort supérieur du piston du moteur est disponible.

5. Installation d'allumage par condensateur selon la revendication 4, caractérisée en ce qu'il est prévu une bobine de déclenchement supplémentaire agencée après la bobine d'allumage dans le sens de rotation de la roue polaire pour produire l'étincelle d'allumage de démarrage.

6. Installation d'allumage par condensateur selon la revendication 5, caractérisée en ce que la bobine de déclenchement en série avec une diode est commutée en parallèle avec la sortie de l'impulseur d'allumage électronique.

7. Installation d'allumage par condensateur selon la revendication 6, caractérisée en ce que les étincelles d'allumage de démarrage sont court-circuitées via un commutateur électrique, de préférence, un transistor, qui est commuté par l'impulseur d'allumage électronique sur le réglage d'impulsion d'allumage électronique lorsque le nombre de tours de commutation prédéterminé est atteint.

8. Installation d'allumage par condensateur selon la revendication 4, caractérisée en ce que l'étincelle d'allumage de démarrage est dérivée du flanc négatif de la deuxième impulsion positive induite par la roue polaire dans la bobine d'allumage.

9. Installation d'allumage par condensateur selon la revendication 4, caractérisée en ce que l'étincelle d'allumage de démarrage est dérivée du flanc positif de la première impulsion positive induite par la roue polaire dans la bobine d'allumage.
